# EUROPEAN PATENT SPECIFICATION

(11) **EP 2 770 026 B1**
(45) Date of publication and mention of the grant of the patent: **21.02.2018**
(21) Application number: 12841340.8
(22) Date of filing: 07.09.2012
(51) Int. Cl.: C08L 77/02, B32B 1/08, B32B 27/34, C08K 5/101, C08K 5/435, C08L 23/26

(54) **POLYAMIDE RESIN COMPOSITION AND HOLLOW MOLDED BODY CONTAINING SAME**
POLYAMIDHARZZUSAMMENSETZUNG UND DARAUS GEFORMTER HOHLKÖRPER
COMPOSITION DE RÉSINE POLYAMIDE ET CORPS MOULÉ CREUX LA CONTENANT

(30) Priority: 21.10.2011 JP 2011231557
(43) Date of publication of application: 27.08.2014
(73) Proprietor: Ube Industries, Ltd., Ube-shi, Yamaguchi 755-8633 (JP)
(72) Inventor: KUBO, Tsuyoshi, Ube-shi, Yamaguchi 755-8633 (JP); OKAMURA, Shigekazu, Ube-shi, Yamaguchi 755-8633 (JP); FUJII, Hiroaki, Ube-shi, Yamaguchi 755-8633 (JP); KATAYAMA, Naoya, Ube-shi, Yamaguchi 755-8633 (JP)
(74) Representative: Hoffmann Eitle
(86) International application number: PCT/JP2012/072916
(87) International publication number: WO 2013/058027

(56) References cited:
- WO-A1-2005/071301
- JP-A- 2000 328 469
- JP-A- 2001 018 307
- JP-A- 2002 181 250
- JP-A- 2003 292 612
- JP-A- 2008 018 702
- JP-A- 2010 132 850
- US-A1- 2012 012 222
- US-B1- 6 670 004

## Description

### FIELD OF THE INVENTION

The present invention relates to a polyamide resin composition and a hollow molded body comprising the same.

### BACKGROUND ART

Hereinafter, polyamide resins are called in accordance with the names described in JIS K 6920-1.

Polyamide 12 (PA 12) is advantageous not only in that a molded article formed from the PA 12 has excellent flexibility, breaking pressure resistance, low-temperature impact resistance, environmental resistance, and chemical resistance, but also in that the PA 12 exhibits excellent moldability and processability when a molded article is produced therefrom. Therefore, PA 12 has been widely used as industrial polyamide resins in various fields including a hollow molded body use, such as a tube for automobile.

### DISCLOSURE OF THE INVENTION

### Problems to be Solved by the Invention

Meanwhile, in recent years, for the reasons mentioned below, the demand for PA 12 is increasing and likely to be always too large.
(1) The demand for PA 12 of developing countries including China is internationally increasing.
(2) Butadiene is not only a raw material monomer for PA 12 but also a raw material for rubber products, such as a tire for automobile, and therefore the demand for butadiene is markedly increasing and likely to be too large.

An object of the present invention is to provide a composition having flexibility, a breaking pressure resistance, a low-temperature impact resistance, an environmental resistance, and a chemical resistance, which are at least equivalent to those of PA 12, and exhibiting excellent moldability and processability when a molded article is produced from the composition, and a hollow molded body using the composition.

WO-A-2011 122143 discloses a fuel hose, whilst US-B-6 670 004 discloses a laminated nylon air brake tubing.

US 2002/0099136 A1 describes a polyamide resin composition comprising 50 to 95 parts by weight of a polyamide resin, 1 to 45 parts by weight of an impact modifier, 0.1 to 20 parts by weight of a plasticizer, 0.01 to 5 parts by weight of a thickener, 0.5 to 10 parts by weight of an ionomer; and a flame-retardant reinforcing filler or a filler.

EP 1 038 921 A describes a polyamide-based thermoplastic composition comprising 50 to 99 wt% of a polyamide, 1 to 50 wt% of a catalyzed polyamide, 0 to 40 wt% of a plasticizer and 0 to 60 wt% of a flexible modifier.

US 2002/0012806 A1 describes a thermoplastic multilayer composite, particularly in the form of a multilayer hose, a multilayer pipe or a multilayer container, containing at least one intermediate layer made of a molding compound on the basis of ethylene/vinyl alcohol copolymers between layers made of molding compounds on the basis of polyamide, the intermediate layer being bonded via at least one adhesion-promoting layer made of a molding compound on the basis of polyamide selected from the group of copolyamide 6/12, block copolyamide 6/12, polyamide 612, polyamide 610, a mixture of polyamide 6 and polyamide 12 with compatibilizer, a mixture of polyamide 6 and polyamide 11 with compatibilizer, with at least one neighboring layer made of a molding compound on the basis of polyamide 12, polyamide 11, polyamide 1010, polyamide 1012, or polyamide 1212.

WO 2006/066944 A1 describes a multilayer tube comprising, in its radial direction from the outside inwards: an outer layer made of polyamide, a tie layer comprising 1 to 50 wt% of an impact modifier chosen from elastomers and very low density polyethylene, the said impact modifier being completely or partly functionalized, per 99 to 50 wt% of at least one copolyamide 6/12 respectively, optionally an EVOH layer, optionally a tie layer, an inner layer made of PA 12, PA6 or a PA 6 - polyolefin blend with a PA 6 matrix and a dispersed polyolefin phase, the layers being successive and adhering to one another in their respective contact zones.

EP 1 378 696 A2 describes a multilayer hose for compressed air, comprising an inner layer in contact with the compressed air, chosen from polyamides, polyamide/polyolefin blends with a polyamide matrix, copolymers having polyamide blocks and polyether blocks, and blends of polyamides with copolymers having polyamide blocks and polyether blocks; an outer layer made of polyamide chosen from PA-11, PA-12, aliphatic polyamides resulting from the condensation of an aliphatic diamine having from 6 to 12 carbon atoms and of an aliphatic diacid having from 9 to 12 carbon atoms, and 11/12 copolyamides either having more than 90 % nylon-11 units or more than 90 % nylon-12 units.

Furthermore, the document describes a multilayer hose comprising an inner layer in contact with the compressed air, made of polyamide chosen from PA-11, PA-12, aliphatic polyamides resulting from the condensation of an aliphatic diamine having from 6 to 12 carbon atoms and of an aliphatic diacid having from 9 to 12 carbon atoms, and 11/12 copolyamides having either more than 90 % nylon-11 units or more than 90 % nylon-12 units; an outer layer made of polyamide which is chosen from the same products as the inner layer and which may be the same or different; at least one interlayer placed between the inner layer and the outer layer chosen from polyamide/polyolefin blends with a polyamide matrix, copolymers having polyamide blocks and polyether blocks, and blends of polyamides with copolymers having polyamide blocks and polyether blocks.

### Means to Solve the Problems

The present invention is directed to:
(1) a polyamide resin composition comprising a PA 6/12 (component A), a plasticizer (component B), and a modified polyolefin (component C),
   the component A comprising units a derived from ε-caprolactam or ε-aminocaproic acid and units b derived from aminododecanoic acid or ω-laurolactam,
   wherein the content of the units a in the units constituting the component A is 60 to 98% by weight and the content of the units b in the units constituting the component A is 40 to 2% by weight,
   wherein the content of the component A in the polyamide resin composition is 50 to 98% by weight, the content of the component B in the polyamide resin composition is 20 to 1% by weight, and the content of the component C in the polyamide resin composition is 30 to 1% by weight as defined in claims 1 and 2 to 4; and
(2) a hollow molded body as defined in claims 5 and 6 to 10 having a layer 1 comprising the polyamide resin composition according to item (1) above.

### Effect of the Invention

In the present invention, there can be provided a composition having flexibility, a breaking pressure resistance, a low-temperature impact resistance, an environmental resistance, and a chemical resistance, which are at least equivalent to those of PA 12, and exhibiting excellent moldability and processability when a molded article is produced from the composition, and a hollow molded body using the composition.

### BEST MODE FOR CARRYING OUT THE INVENTION

### (Description of terms)

In the present specification, polyamide resins are called in accordance with the names described in JIS K 6920-1.

Polyamide 12 (PA 12) is a homopolymer formed from ω-aminododecanoic acid or laurolactam.

The polyamide resin composition of the present invention comprises a PA 6/12 (component A), a plasticizer (component B), and a modified polyolefin (component C).

### (Component A)

Component A is a copolymer of ε-caprolactam or ε-aminocaproic acid and aminododecanoic acid or ω-laurolactam, and comprises units a derived from ε-caprolactam or ε-aminocaproic acid and units b derived from aminododecanoic acid or ω-laurolactam.

From the viewpoint of achieving excellent flexibility, breaking pressure resistance, low-temperature impact resistance, environmental resistance, and chemical resistance, the content of units a in component A is 60 to 98% by weight, preferably 65 to 95% by weight, more preferably 70 to 90% by weight, further preferably 75 to 85% by weight, and the content of units b in component A is 40 to 2% by weight, preferably 35 to 5% by weight, more preferably 30 to 10% by weight, further preferably 25 to 15% by weight.

From the viewpoint of easy availability of the raw material monomer, units a are preferably derived from ε-caprolactam. From the viewpoint of facilitating the production of component A, units b are preferably derived from aminododecanoic acid.

From the viewpoint of achieving excellent moldability and processability when producing a molded article from the resin composition and achieving excellent practical properties including flexibility and low-temperature impact resistance, component A preferably has a relative viscosity of 2.0 to 5.5, more preferably 2.5 to 5.0, further preferably 3.0 to 4.5, as measured in accordance with JIS K 6920 under conditions at a polyamide concentration of 1% in 96% sulfuric acid at a temperature of 25°C.

In the production of component A, a known polymerization method, such as melt polymerization, solution polymerization, interfacial polymerization, solid phase polymerization, or a combination thereof, can be used.

Generally, melt polymerization conducted at a temperature higher than the melting point of the obtained component A is preferably used.

Further, in the production of component A, a known polymerization apparatus can be used, and component A can be produced, e.g., in a batchwise manner or in a continuous manner, if necessary, by appropriately combining operations under atmospheric pressure, a reduced pressure, or an increased pressure.

### (Component B)

From the viewpoint of more stably and surely obtaining a hollow molded body having flexibility, i.e., obtaining a plasticizing effect, the plasticizer, which is component B used in the polyamide resin composition of the present invention, is preferably at least one compound selected from the group consisting of an arylsulfonamide derivative and a hydroxybenzoic acid ester or a derivative thereof.

As a preferred example of the arylsulfonamide derivative, there can be mentioned a compound represented by the following general formula (1): 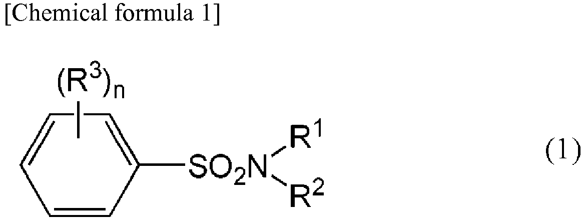 wherein at least one of R¹ and R² represents an alkyl group having 1 to 10 carbon atoms and another one represents a hydrogen atom or an alkyl group having 1 to 10 carbon atoms, R³ represents an alkyl group having 1 to 4 carbon atoms, and n is an integer of 0 to 5, and, when n is 2 or more, R^{3,}s may be the same or different.

From the viewpoint of obtaining excellent plasticizing effect, preferred is an arylsulfonamide derivative of the general formula (1) wherein R¹ is an alkyl group having 1 to 10 carbon atoms, R² is a hydrogen atom, R³ is a methyl group, and n is 0 or 1.

Examples of such arylsulfonamide derivatives include alkylbenzenesulfonamides and alkyltoluenesulfonamides.

Examples of alkylbenzenesulfonamides include propylbenzenesulfonamide, butylbenzenesulfonamide, and 2-ethylhexylbenzenesulfonamide. Examples of alkyltoluenesulfonamides include butyl-o- or p-toluenesulfonamide and 2-ethylhexyl-o- or p-toluenesulfonamide.

As a preferred example of the hydroxybenzoic acid ester or derivative thereof, there can be mentioned a compound represented by the following general formula (2): 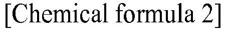 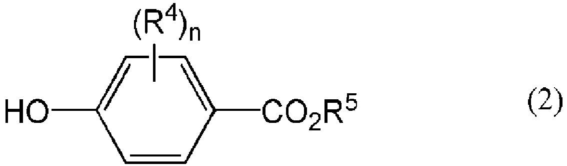 wherein R⁴ represents an alkyl group having 1 to 4 carbon atoms, and R⁵ represents an alkyl group having 4 to 20 carbon atoms, and may contain at least one group selected from an ether group, an oxyethylene group, and an oxypropylene group.

In the general formula (2), from the viewpoint of obtaining excellent plasticizing effect, R⁴ preferably represents a methyl group, and R⁵ preferably represents an alkyl group having 4 to 20 carbon atoms, more preferably 6 to 18 carbon atoms.

The alkyl group having 4 to 20 carbon atoms may be either linear or branched.

Examples of the alkyl groups include various butyl groups, various pentyl groups, various hexyl groups, a 2-ethylhexyl group, various octyl groups, various decyl groups, various dodecyl groups, various tetradecyl groups, a 2-ethyldecyl group, various cetyl groups, various octadecyl groups, and a cyclohexylmethyl group.

Examples of hydroxybenzoic acid esters include 2-ethylhexyl p-hydroxybenzoate, 2-ethyldecyl p-hydroxybenzoate, and 2-hexyldecyl p-hydroxybenzoate.

The alkyl group having 4 to 20 carbon atoms as R⁵ may contain at least one group selected from an ether group, an oxyethylene group, and an oxypropylene group. The alkyl group may be, for example, a -(OCH₂CH₂)₂-O-(2-ethylhexyl group).

### (Component C)

Component C, which is the modified polyolefin used in the polyamide resin composition of the present invention, is a rubber-like polymer intended to surely obtain the hollow molded body of the present invention having more stable low-temperature impact resistance, and preferably has a modulus in tension of 1 to 500 MPa, more preferably 1 to 300 MPa, further preferably 1 to 100 MPa, as measured in accordance with ASTM D 882.

Component C is at least one compound selected from the group consisting of:
an (ethylene and/or propylene)-α-olefin copolymer,
an (ethylene and/or propylene)-(α,β-unsaturated carboxylic acid and/or unsaturated carboxylic acid ester) copolymer,
an ionomer polymer, and
an aromatic vinyl compound-conjugated diene compound block copolymer.

The (ethylene and/or propylene)-α-olefin copolymer is a polymer obtained by copolymerizing ethylene and/or propylene with an α-olefin having 3 or more carbon atoms, and examples of α-olefins having 3 or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, and combinations thereof.

Further, a polyene of a non-conjugated diene, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, methylenenorbornene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, or 2-propenyl-2,2-norbornadiene, may be copolymerized with the polymer.

The (ethylene and/or propylene)-(α,β-unsaturated carboxylic acid and/or unsaturated carboxylic acid ester) copolymer is a polymer obtained by copolymerizing ethylene and/or propylene with an α, β-unsaturated carboxylic acid and/or unsaturated carboxylic acid ester monomer. Examples of α,β-unsaturated carboxylic acid monomers include acrylic acid and methacrylic acid, and examples of α,β-unsaturated carboxylic acid ester monomers include methyl esters, ethyl esters, propyl esters, butyl esters, pentyl esters, hexyl esters, heptyl esters, octyl esters, nonyl esters, or decyl esters of the unsaturated carboxylic acid, and mixtures thereof.

The ionomer polymer is a copolymer of an olefin and an α,β-unsaturated carboxylic acid, in which at least part of the carboxyl group is ionized due to neutralization by a metal ion.

As an olefin, ethylene is preferably used, and, as an α,β-unsaturated carboxylic acid, acrylic acid or methacrylic acid is preferably used, but they are not limited to those mentioned above, and an unsaturated carboxylic acid ester monomer may be copolymerized with the polymer.

Examples of metal ions include alkali metals and alkaline earth metals, such as Li, Na, K, Mg, Ca, Sr, and Ba; and Al, Sn, Sb, Ti, Mn, Fe, Ni, Cu, Zn, and Cd.

With respect to each of the (ethylene and/or propylene)-α-olefin copolymer, (ethylene and/or propylene)-(α,β-unsaturated carboxylic acid and/or unsaturated carboxylic acid ester) copolymer, ionomer polymer, and aromatic vinyl compound-conjugated diene compound block copolymer, a polymer modified with a carboxylic acid and/or a derivative thereof is used. By modifying a polymer with such a component, the polymer contains in the molecule thereof a functional group having affinity with the polyamide resin.

Examples of functional groups having affinity with the polyamide resin include a carboxyl group, an acid anhydride group, a carboxylic acid ester group, a carboxylic acid metal salt, a carboxylic acid imide group, a carboxylic acid amide group, and an epoxy group. Examples of compounds containing the above functional group include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. These can be used individually or in combination.

Of these, from the viewpoint of achieving excellent low-temperature impact resistance, and reducing the cost, and easy availability, component C is preferably an ethylene/propylene copolymer modified with maleic acid and/or an ethylene/butene copolymer modified with maleic acid.

### (Other components)

In the polyamide resin composition of the present invention, if necessary, a resin other than components A and C can be further added in such an amount that the effects of the present invention are not sacrificed. As examples of such resins, there can be mentioned polyamide resins, such as PA 11, PA 12, PA 66, PA 610, PA 612, PA 1212, and PA 6/66. As a resin other than the polyamide resins, for example, polypropylene, an ABS resin, polyphenylene oxide, polycarbonate, polyethylene terephthalate, or polybutylene terephthalate can be added to the composition.

In the polyamide resin composition of the present invention, if necessary, an additive other than component B can be further added in such an amount that the effects of the present invention are not sacrificed. For example, a pigment, a dye, a coloring agent, a heat stabilizer, an antioxidant, a weathering agent, an ultraviolet light absorber, a light stabilizer, a lubricant, a crystal nucleating agent, a crystallization promoter, a release agent, an antistatic agent, a stabilizer, such as a copper compound, an antistatic agent, a flame retardant, glass fibers, a lubricating agent, a filler, reinforcing fibers, reinforcing particles, or a foaming agent can be added to the composition.

From the viewpoint of improving the molding stability and obtaining a hollow molded body having excellent appearance, it is preferred that the polyamide resin composition of the present invention contains a stabilizer, such as a copper compound, and/or a crystal nucleating agent.

Examples of stabilizers, such as copper compounds, include copper(I) chloride, copper(II) chloride, copper(I) bromide, copper(II) bromide, copper(I) iodide, copper(II) iodide, copper(II) sulfate, copper(II) nitrate, copper(II) phosphate, copper(II) pyrophosphate, copper(I) acetate, copper(II) acetate, copper(II) salicylate, copper(II) stearate, copper(II) benzoate, and the above-mentioned inorganic copper halides, and preferred is copper(I) iodide. The content of a stabilizer, such as a copper compound, in the polyamide resin composition of the present invention is 0.2 to 3% by weight, preferably 0.2 to 1% by weight, more preferably 0.2 to 0.5% by weight.

As examples of crystal nucleating agents, there can be mentioned dibenzylidenesorbitol compounds. Examples of dibenzylidenesorbitol compounds include 1·3,2·4-dibenzylidenesorbitol, 1·3,2·4-di(4-methylbenzylidene)sorbitol, 1·3,2·4-di(4-ethylbenzylidene)sorbitol, 1·3,2·4-di(dimethylbenzylidene)sorbitol, 1,3-(4-methylbenzylidene)-2,4-benzylidenesorbitol, 1·3-(dimethylbenzylidene)-2·4-benzylidenesorbitol, and 1·3-(4-chlorobenzylidene)-2·4-(4-methylbenzylidene)sorbitol. Of these, preferred are 1·3,2·4-dibenzylidenesorbitol, 1·3,2·4-di(4-methylbenzylidene)sorbitol, 1·3-(dimethylbenzylidene)-2·4-benzylidenesorbitol, sodium 2,2'-methylene-bis(4,6-di-t-butylphenyl)phosphate, and aluminum bis(2,4,8,10-tetra-t-butyl-hydroxy-12H-dibenzo[d,g][1,3,2]dioxaphosphocin-6-oxide)hy droxide, and more preferred are 1·3,2·4-dibenzylidenesorbitol, 1·3,2·4-di(4-methylbenzylidene)sorbitol, and 1·3-(dimethylbenzylidene)-2·4-benzylidenesorbitol. From the viewpoint of improving the molding stability and reducing the cost, the content of a crystal nucleating agent used in the present invention, such as a dibenzylidenesorbitol compound, in the polyamide resin composition of the present invention is 0.05 to 2% by weight, preferably 0.1 to 1% by weight, more preferably 0.2 to 0.5% by weight.

### (Polyamide resin composition of the present invention)

From the viewpoint of achieving all the flexibility, breaking pressure resistance, low-temperature impact resistance, environmental resistance, and chemical resistance (hereinafter, they are frequently referred to as "practical performance") and more stably and surely achieving excellent moldability and processability (hereinafter, collectively referred to as "moldability") when producing a molded article from the resin composition, the content of component A in the polyamide resin composition of the present invention is 50 to 98% by weight, preferably 60 to 95% by weight, more preferably 70 to 92% by weight, the content of component B in the polyamide resin composition is 20 to 1% by weight, preferably 15 to 2% by weight, more preferably 10 to 3% by weight, and the content of component C in the polyamide resin composition is 30 to 1% by weight, preferably 25 to 3% by weight, more preferably 20 to 5% by weight.

The total amount of components A, B, and C contained in the resin composition of the present invention is preferably 70 to 100% by weight, more preferably 80 to 100% by weight, further preferably 90 to 100% by weight.
Component A is a chief material of the polyamide resin composition of the present invention, which is a polyamide component as a substitute for PA 12, and constitutes the base of practical performance and processability.
Component B is used for achieving the flexibility of a hollow molded body obtained by subjecting the polyamide resin composition of the present invention to blow molding, which is equivalent to the flexibility obtained in the case using PA 12. Taking into consideration the breaking pressure resistance, low-temperature impact resistance, and suppression of the bleedout of component B, the above-mentioned range of the content of component B is preferred.
Component C is used for achieving the low-temperature impact resistance of a hollow molded body obtained by subjecting the polyamide resin composition of the present invention to blow molding, which is equivalent to the low-temperature impact resistance obtained in the case using PA 12. Taking into consideration the breaking pressure resistance and chemical resistance, the above-mentioned range of the content of component C is preferred.

With respect to the method for producing the polyamide resin composition of the present invention, there is no particular limitation, and the composition can be produced by melt-kneading components A, B, and C using a single-screw, twin-screw, or multi-screw extruder, and further another kneader can be used. Further, the above-mentioned other polymer and additive can be added when melt-kneading components A, B, and C.

The polyamide resin composition of the present invention can be used in a wide variety of applications, e.g., various molded articles in which a polyamide resin composition has conventionally been used, automobile members in the form of, e.g., a sheet, a film, a pipe, a tube, a hose, monofilaments, fibers, or a container, computer and related machines, optical machine members, electric and electronic devices, information and communication machines, precision machines, civil engineering and construction products, medical products, and household products. The composition is reinforced and hence advantageously used especially in applications, such as automobiles and electric and electronic devices.

With respect to the polyamide resin composition of the present invention, any known shaping method which can be applied to a polyamide resin composition, such as injection, extrusion, blowing, pressing, rolling, expansion, vacuum or pressure forming, or stretching, can be used, and the polyamide resin composition can be processed by the above shaping method into, e.g., a film, a sheet, a molded article, or a fiber.

The polyamide resin composition of the present invention can be used as a substitute resin for PA 12 preferably in the technical field in which PA 12 is used, more preferably in the field to which the below-mentioned hollow molded body using PA 12 is applied, further preferably in the field to which the below-mentioned hollow molded body using PA 12 for automobile is applied.

### (Hollow molded body of the present invention)

The hollow molded body of the present invention has layer 1 formed by subjecting the polyamide resin composition of the present invention to molding.

In the case where a resin other than the resin contained in the polyamide resin composition of the present invention and/or an additive is incorporated into the polyamide resin composition of the present invention which is being subjected to blow molding to form layer 1, when the resin composition obtained after the incorporation of the resin and/or additive corresponds to the polyamide resin composition defined in the present invention, the resin composition obtained after the incorporation is regarded as the polyamide resin composition.

The hollow molded body of the present invention can be used in parts or products formed by blow molding, for example, fuel tanks, such as a gasoline tank, an oil tank, and other tanks, various types of bottles, such as a bottle for agricultural chemicals and a bottle for potable water, and various applications, such as intake and exhaust parts for various machines and automobile, e.g., an air duct and an intake manifold, and outer plate and exterior structural members for automobile, e.g., an air spoiler, a fender, and a bumper. Examples of blow molded parts include a fuel delivery pipe, a throttle body, a resonator, an air cleaner box, a suspension boot, an air intake manifold, an air cleaner, a resonator, a fuel rail, a hose joint, a hydraulic tube, a pneumatic tube, a fuel tube, a hydraulic hose, a pneumatic hose, and a fuel hose.

The hollow molded body of the present invention comprising even only layer 1 has practical performance equivalent to that of a single-layer hollow molded body using PA 12.

From the viewpoint of achieving excellent stability during the molding and environmental resistance, it is preferred that the hollow molded body of the present invention further has layer 2 formed by subjecting a resin composition comprising a polyamide resin to molding, wherein layer 1 and layer 2 are stacked so that the layers are in contact with each other. In this case, from the viewpoint of achieving excellent stability during the molding, environmental resistance, and appearance, it is more preferred that layer 1 is the innermost layer of the hollow molded body.

Meanwhile, from the viewpoint of achieving excellent stability during the molding and environmental resistance, it is preferred that the hollow molded body of the present invention further has layers 3 and 4 each formed by subjecting a resin composition comprising a polyamide resin to molding, wherein layers 1, 3, and 4 are stacked so that the layers are in contact with one another, wherein layer 1 is not any of the outermost layer and the innermost layer of the hollow molded body.

When layers 1, 3, and 4 are stacked so that the layers are in contact with one another, the combination of layers 1, 3, and 4 may be optional as long as all the layers are in contact with one another. Examples of the combinations include layer 1/layer 3/layer 4, layer 1/layer 4/layer 3, and layer 3/layer 1/layer 4. In each of the layer 1/layer 3/layer 4 combination and the layer 1/layer 4/layer 3 combination, it is preferred that layer 1 is not any of the outermost layer and the innermost layer of the hollow molded body. When layer 1 is positioned on the inner layer side, it is preferred that a layer in contact with layer 1 is stacked so that layer 1 does not become the innermost layer.

Further, from the viewpoint of achieving excellent stability during the molding and low-temperature impact resistance, it is preferred that the above-mentioned layers 3 and 4 comprise polyamide 11 and/or polyamide 12.

From the viewpoint of reducing the PA 12 content, the total thickness of layer 1 in the hollow molded body is preferably 15 to 100% of the total thickness of the all stacked layers in the hollow molded body, more preferably 50 to 100% of the total thickness of the all stacked layers in the hollow molded body, further preferably 70 to 100% of the total thickness of the all stacked layers in the hollow molded body.

When the layers individually comprise the polyamide resin compositions of the present invention having different formulations, all these layers are layers 1 having different formulations. Therefore, the total thickness of these layers corresponds to the thickness of layer 1.

The hollow molded body of the present invention is obtained by subjecting the polyamide resin composition of the present invention to molding into a form of film, sheet, tube, hose, or another form using, for example, an extruding machine, a blow molding machine, a compression molding machine, or an injection molding machine, and when the resultant article is in a film form or in a sheet form, a hollow molded body may be obtained by subjecting the film or sheet to post-molding. As a method for stacking layers, an optional melt molding method, such as a co-extrusion method (e.g., T-die extrusion, blown-film extrusion, blow molding, profile extrusion, or extrusion coating), or a laminating injection molding method, is employed.

As examples of methods for producing a multi-layer tube or a laminated hose, there can be mentioned a method in which molten resins extruded by extruders, of which the number corresponds to the number of layers constituting a tube or hose or the number of materials therefor, are introduced into one dice, and the resultant layers are bonded together inside the dice or immediately outside the dice, and then a multi-layer tube or a laminated hose is produced in the same manner as in the general molding for tube or hose, and a method in which a single-layer tube or a single-layer hose is first molded and then another layer is coated on the outer surface of the resultant tube or hose.

The tube or hose may be either in a straight form or processed into a bellows-like form.

A protective layer may be formed on the outer surface of a straight multi-layer tube or laminated hose, and examples of materials for forming the protective layer include rubbers, such as a chloroprene rubber, an ethylene-propylene-diene ternary copolymer, an epichlorohydrin rubber, chlorinated polyethylene, an acrylic rubber, chlorosulfonated polyethylene, and a silicone rubber.

### EXAMPLES

Hereinbelow, the present invention will be described in more detail with reference to the following Examples, which should not be construed as limiting the scope of the present invention.

### (Raw materials 1)

[Component A] PA 6/12 in which the weight ratio of units a derived from ε-caprolactam to units b derived from aminododecanoic acid (a/b) is a/b = 78:22 to 82:18 (7034B, manufactured by Ube Industries, Ltd.; relative viscosity: 3.87)
[Component B] Plasticizer {BBSA (butylbenzenesulfonamide), manufactured by Proviron}
[Component C] Modified polyolefin {TAFMER MH7010 (maleic acid-modified ethylene/butene copolymer), manufactured by Mitsui Chemicals, Inc.}
[Additional polyamide resin 1] PA 6 (1024JI, manufactured by Ube Industries, Ltd.)
[Additional polyamide resin 2] PA 12 (3030JI9L, manufactured by Ube Industries, Ltd.)
[Additional polyamide resin 3] PA 6/66 (5033JI2, manufactured by Ube Industries, Ltd.)
[Bonding agent] Modified polypropylene (ADMER QB520E, manufactured by Mitsui Chemicals, Inc.)

Hereinafter, the additional polyamide resins 1, 2, and 3 are frequently referred to simply as, polyamide resins 1, 2, and 3, respectively.

### (Production method 1 for resin composition)

### (1) Example 1

Component C was preliminarily mixed into component A, and, while feeding the resultant mixture into a twin-screw melt kneader (manufactured by The Japan Steel Works, Ltd.; model: TEX44), component B was charged through a portion of the cylinder of the twin-screw melt kneader by means of a constant delivery pump, and melt-kneading was performed at a cylinder temperature of 200 to 270°C. The molten resin was extruded into a strand form, and then the resultant strand was introduced into a water bath, and cooled and cut, followed by vacuum drying, to obtain pellets of the polyamide resin composition of the present invention comprising component A: 85% by weight, component B: 5% by weight, and component C: 10% by weight.

### (Production conditions 1 for hollow molded body)

### (2) Example 2

Using Plabor (manufactured by Research Laboratory of Plastics Technology Co., Ltd.) single-layer extruding machine, the polyamide resin composition in Example 1 was molten at an extrusion temperature of 240°C, and the extruded molten resin was introduced to a single-layer die at 240°C using an adapter to form a single-layer tube which is a hollow molded body.

Subsequently, the resultant tube was cooled by a sizing die for controlling the size, followed by taking off, to obtain a single-layer tube having a layer thickness of 1.5 mm, an inner diameter of 9 mm, and an outer diameter of 12 mm.

### (3) Example 3

A four-layer tube which is the hollow molded body of the present invention, in which layer 1 comprising the polyamide resin composition in Example 1, layer 2-1 comprising polyamide resin 1 (PA 6), layer 5 comprising a bonding agent, and layer 2-2 comprising polyamide resin 2 (PA 12) are stacked in the order of layer 1/layer 2-1/layer 5/layer 2-2 wherein layer 1 is the innermost, was produced under the following conditions.

Using Plabor (manufactured by Research Laboratory of Plastics Technology Co., Ltd.) four-layer co-extruding machine, the polyamide resin composition in Example 1, polyamide resin 1, the bonding agent, and polyamide resin 2 were individually molten at respective extrusion temperatures of 240°C for layer 1, 250°C for layer 2-1, 220°C for layer 5, and 240°C for layer 2-2, and the extruded molten resins were introduced using an adapter and mixed together in a multi-layer die at 260°C to form a four-layer tube.

Subsequently, the resultant tube was cooled by a sizing die for controlling the size, followed by taking off, to obtain a four-layer tube having a layer thickness: layer 1/layer 2-1/layer 5/layer 2-2 = 0.15/0.75/0.15/0.45 mm (wherein layer 1 is the innermost), an inner diameter of 9 mm, and an outer diameter of 12 mm.

With respect to the obtained four-layer tube, the results of the measurement of physical properties are shown in Table 1.

### (4) Comparative Example 1

A four-layer tube was produced under substantially the same conditions as in Example 3 except that, instead of the polyamide resin composition of the present invention, polyamide resin 3 (PA 6/66) was used.

### (5) Comparative Example 2

A four-layer tube was produced under substantially the same conditions as in Example 3 except that, instead of the polyamide resin composition of the present invention, component A used in Example 1 was used.

### (6) Comparative Example 3

A four-layer tube was produced under substantially the same conditions as in Example 3 except that, instead of the polyamide resin composition of the present invention, the bonding agent (ADMER QB520E) used in Example 1 was used, and that the extrusion temperature was changed to 220°C.

### (7) Comparative Example 4

A three-layer tube which is a hollow molded body, in which layer 2-1 comprising polyamide resin 1 (PA 6), layer 5 comprising a bonding agent, and layer 2-2 comprising polyamide resin 2 (PA 12) are stacked in the order of layer 2-1/layer 5/layer 2-2 wherein layer 2-1 is the innermost, was produced under the following conditions.

Using Plabor (manufactured by Research Laboratory of Plastics Technology Co., Ltd.) three-layer co-extruding machine, polyamide resin 1, the bonding agent, and polyamide resin 2 were individually molten at respective temperatures of 250°C for layer 2-1, 220°C for layer 5, and 240°C for layer 2-2, and the extruded molten resins were introduced using an adapter and mixed together in a multi-layer die at 260°C to form a three-layer tube.

Subsequently, the resultant tube was cooled by a sizing die for controlling the size, followed by taking off, to obtain a three-layer tube having a layer thickness: layer 2-1/layer 5/layer 2-2 = 0.90/0.15/0.45 mm (wherein layer 2-1 is the innermost), an inner diameter of 9 mm, and an outer diameter of 12 mm.

### (8) Comparative Example 5

Using Plabor (manufactured by Research Laboratory of Plastics Technology Co., Ltd.) single-layer extruding machine, polyamide resin 2 (PA 12) was molten at an extrusion temperature of 240°C, and the extruded molten resin was introduced to a single-layer die at 240°C using an adapter to form a single-layer tube which is a hollow molded body.

Subsequently, the resultant tube was cooled by a sizing die for controlling the size, followed by taking off, to obtain a single-layer tube having a layer thickness of 1.5 mm, an inner diameter of 9 mm, and an outer diameter of 12 mm.

### (Evaluation conditions 1 for physical properties)

### (1) Tensile elongation

Evaluation was made in accordance with the method described in SAE J-2260 A.4.1.

### (2) Flexibility

Evaluation was made in accordance with substantially the same method as described in SAE J-844 9.8 except that the pretreatment at 110°C for 24 hours was not performed.

### (3) Breaking pressure

Evaluation was made in accordance with the method described in SAE J-2260 7.1 under conditions at 23°C and conditions at 125°C.

### (4) Low-temperature impact resistance

Evaluation was made in accordance with substantially the same method as described in DIN 73378 6.4.6 except that the temperature was changed to -60°C.

### (5) Dimensional stability

When the measured outer diameter of a tube was within the range of 12 ± 0.15 mm, the tube was judged to be stable.

On the other hand, when the measured outer diameter of a tube was outside of the range of 12 ± 0.15 mm, the tube was judged to be unstable.

### (6) Zinc chloride resistance

With respect to each of the resin composition forming layer 1 of the hollow molded bodies in Examples 2 and 3 and the resin forming a layer corresponding to layer 1 of the hollow molded bodies produced in Comparative Examples 1 to 5, an ISO 527-1 Type A test specimen was prepared by means of an injection molding machine. In conditions for the injection, the resin temperatures were as follows.
240°C (resin composition forming layer 1 in Examples 2 and 3),
240°C {polyamide resin (PA 6/12)},
250°C {polyamide resin 1 (PA 6)},
240°C {polyamide resin 2 (PA 12)},
240°C {polyamide resin 3 (PA 6/66)},
220°C {bonding agent (ADMER QB520E)}.

Injection molding was conducted at a mold temperature of 80°C to obtain a test plate.

Conditions for the injection molding were as follows: injection pressure: primary pressure: 50 MPa; injection time: 20 seconds; and cooling time: 20 seconds.

The prepared test specimen was treated in hot water at 90°C for 2 hours, and then taken out the water, and a 10% by weight aqueous zinc chloride solution was placed dropwise on the specimen.

Then, the resultant specimen was dried in an oven with internal air circulation at 100°C for 2 hours, and then taken out.

After a series of the above operations, which is taken as one cycle, the surface of the specimen was examined under the below-mentioned conditions for evaluation, and the cycle was repeated until a crack was caused in the surface or until 10 cycles.

After each cycle, the surface of the specimen was examined using a microscope at a magnification of 10 times to check whether a crack was caused in the surface of the specimen.

### The results of the evaluation are shown in Table 1.

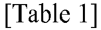

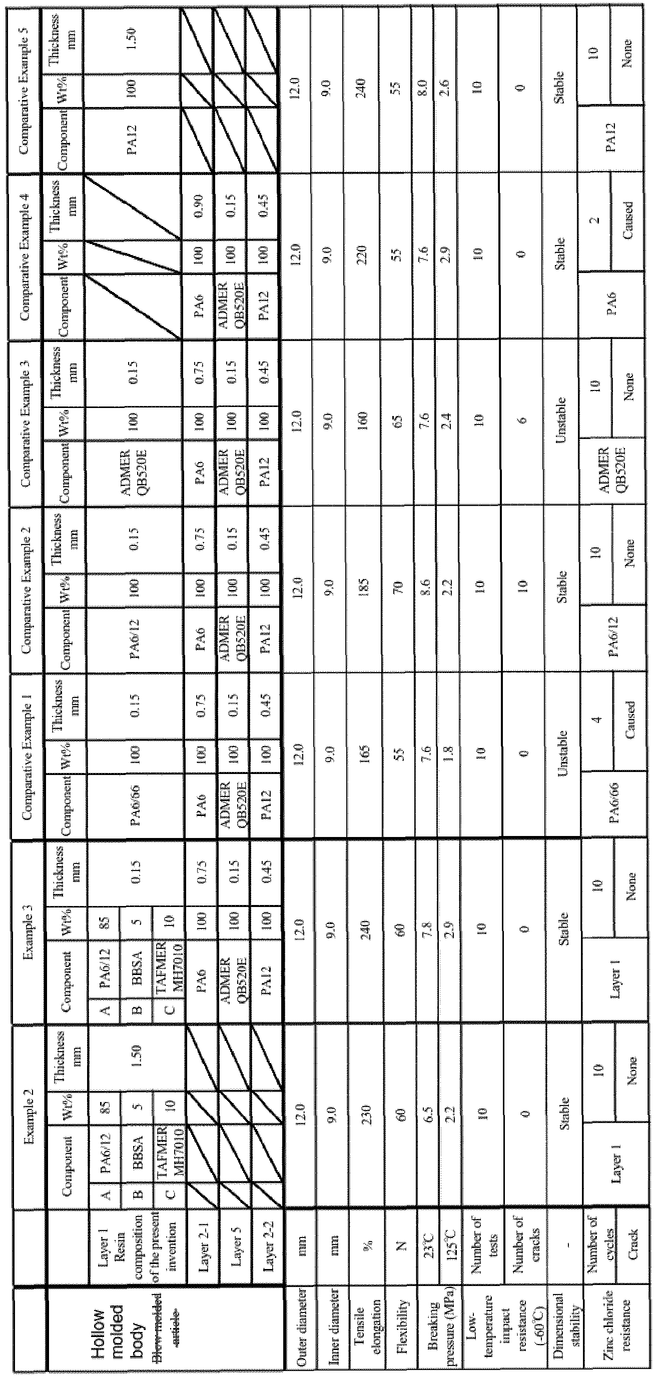

As apparent from Table 1 above, the single-layer hollow molded body (Example 2) and the four-layer hollow molded body (Example 3), each of which is a hollow molded body formed from the polyamide resin composition of the present invention (Example 1), individually exhibit physical properties substantially equivalent to those of the single-layer hollow molded body formed from PA 12, which indicates that the present invention can be used as a substitute resin composition for PA 12 for which the demand is markedly increasing in recent years and likely to be too large.

### (Raw materials 2)

[Component A] PA 6/12 in which the weight ratio of units a derived from ε-caprolactam to units b derived from aminododecanoic acid (a/b) is a/b = 78:22 to 82:18 (7034B, manufactured by Ube Industries, Ltd.; relative viscosity: 3.87)
[Component B] Plasticizer {BBSA (butylbenzenesulfonamide), manufactured by Proviron}
[Component C] Modified polyolefin {TAFMER MH5010 (maleic acid-modified ethylene/butene copolymer), manufactured by Mitsui Chemicals, Inc.}
[Additional polyamide resin 4] PA 12/6 (7115U, manufactured by Ube Industries, Ltd.)

Hereinafter, the additional polyamide resin 4 is frequently referred to simply as "polyamide resin 4".

### (Production method 2 for resin composition)

### (1) Example 4A

Component C was preliminarily mixed into component A, and, while feeding the resultant mixture into a twin-screw melt kneader (manufactured by The Japan Steel Works, Ltd.; model: TEX44), component B was charged through a portion of the cylinder of the twin-screw melt kneader by means of a constant delivery pump, and melt-kneading was performed at a cylinder temperature of 200 to 270°C. The molten resin was extruded into a strand form, and then the resultant strand was introduced into a water bath, and cooled and cut, followed by vacuum drying, to obtain pellets of the polyamide resin composition of the present invention comprising component A: 80% by weight, component B: 5% by weight, and component C: 15% by weight.

### (Production conditions 2 for hollow molded body)

### (2) Example 4

Using Plabor (manufactured by Research Laboratory of Plastics Technology Co., Ltd.) single-layer extruding machine, the polyamide resin composition in Example 4A was molten at an extrusion temperature of 240°C, and the extruded molten resin was introduced to a single-layer die at 240°C using an adapter to form a single-layer tube which is the hollow molded body.

Subsequently, the resultant tube was cooled by a sizing die for controlling the size, followed by taking off, to obtain a single-layer tube having a layer thickness of 1.5 mm, an inner diameter of 9 mm, and an outer diameter of 12 mm.

### (3) Comparative Example 6

A single-layer tube was produced under substantially the same conditions as in Example 4 except that the formulation was changed to: component A: 85% by weight, component B: 0% by weight, and component C: 15% by weight.

### (4) Comparative Example 7

A single-layer tube was produced under substantially the same conditions as in Example 4 except that the formulation was changed to: component A: 60% by weight, component B: 25% by weight, and component C: 15% by weight.

### (5) Comparative Example 8

A single-layer tube was produced under substantially the same conditions as in Example 4 except that the formulation was changed to: component A: 95% by weight, component B: 5% by weight, and component C: 0% by weight.

### (6) Comparative Example 9

A single-layer tube was produced under substantially the same conditions as in Example 4 except that the formulation was changed to: component A: 60% by weight, component B: 5% by weight, and component C: 35% by weight.

### (7) Comparative Example 10

A single-layer tube was produced under substantially the same conditions as in Example 4 except that, instead of component A, a polyamide resin (PA 12/6) was used.

(Evaluation conditions 2 for physical properties)
(1) Tensile elongation, (2) flexibility, (3) breaking pressure, (4) low-temperature impact resistance, (5) dimensional stability, and (6) zinc chloride resistance were evaluated under the same conditions as Evaluation conditions 1 for physical properties.

The results of the evaluation are shown in Table 2.

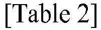

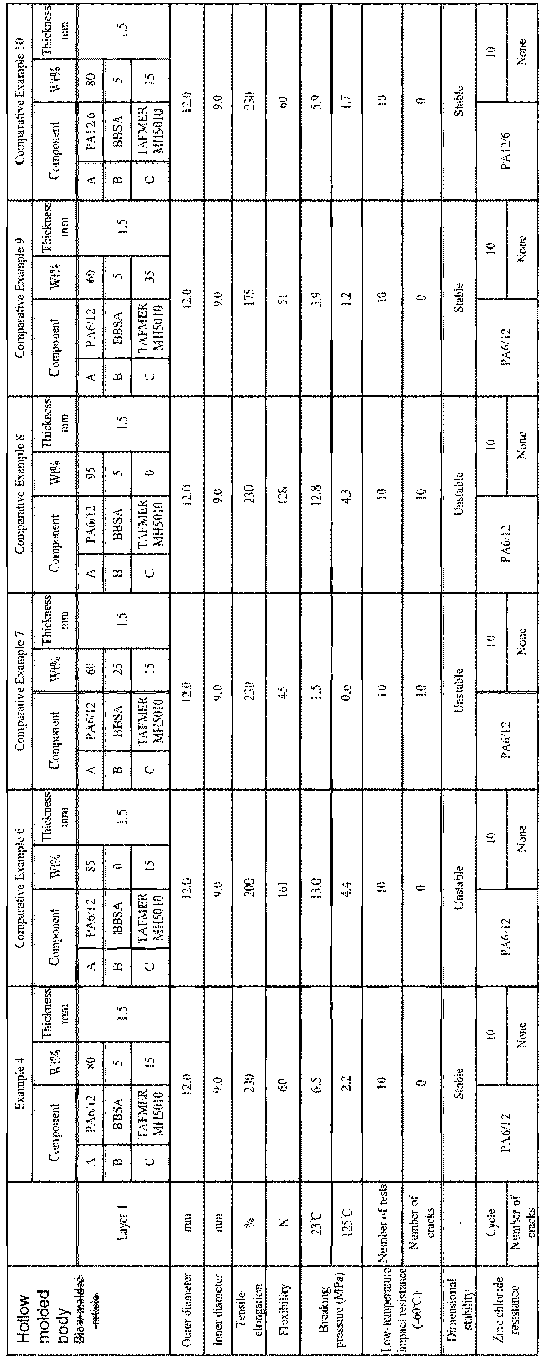

As apparent from Table 2 above, when the content of component A in the polyamide resin composition is 50 to 98% by weight, the content of component B in the polyamide resin composition is 20 to 1% by weight, and the content of component C in the polyamide resin composition is 30 to 1% by weight, there can be provided a composition having excellent flexibility, breaking pressure resistance, low-temperature impact resistance, environmental resistance, and chemical resistance, and exhibiting excellent moldability and processability when a molded article is produced from the composition, and a hollow molded body using the composition.

### (Raw materials 3)

[Component A] PA 6/12 in which the weight ratio of units a derived from ε-caprolactam to units b derived from aminododecanoic acid (a/b) is a/b = 78:22 to 82:18 (7034B, manufactured by Ube Industries, Ltd.; relative viscosity: 3.87)
[Component B] Plasticizer {BBSA (butylbenzenesulfonamide), manufactured by Proviron}
[Component C] Modified polyolefin {TAFMER MH5010 (maleic acid-modified ethylene/butene copolymer), manufactured by Mitsui Chemicals, Inc.}
[Crystal nucleating agent] Dibenzylidenesorbitol compound {GEL ALL D (1·3,2·4-dibenzylidenesorbitol), manufactured by New Japan Chemical Co., Ltd.}
[Stabilizer] Copper compound {copper(I) iodide (CuI), manufactured by Ise Chemicals Corporation}
[Antioxidant 1] Phenolic antioxidant (IRGANOX 245, manufactured by BASF Japan Ltd.)
[Antioxidant 2] Phosphoric acid antioxidant (IRGAFOS 168, manufactured by BASF Japan Ltd.)
[Other component] Carbon black (VALCAN 9A32, manufactured by Cabot Corporation)

### (Production method 3 for resin composition)

### (1) Example 5

Component C and other optional components were preliminarily mixed into component A as shown in Table 3 below, and, while feeding the resultant mixture into a twin-screw melt kneader (manufactured by The Japan Steel Works, Ltd.; model: TEX44), component B shown in Table 3 below was charged through a portion of the cylinder of the twin-screw melt kneader by means of a constant delivery pump, and melt-kneading was performed at a cylinder temperature of 200 to 270°C. The molten resin was extruded into a strand form, and then the resultant strand was introduced into a water bath, and cooled and cut, followed by vacuum drying, to obtain pellets of the polyamide resin compositions of the present invention individually having the formulations shown in Table 3 below.

The polyamide resin compositions used for forming the hollow molded bodies in Examples 6 to 10 below are referred to as Examples 5-1 to 5-5, respectively.

### (Production conditions 3 for hollow molded body)

### (2) Examples 6 to 10

Using Plabor (manufactured by Research Laboratory of Plastics Technology Co., Ltd.) single-layer extruding machine, each of the polyamide resin compositions in Example 5 was molten at an extrusion temperature of 240°C, and the extruded molten resin was introduced to a single-layer die at 240°C using an adapter to form a single-layer tube which is the hollow molded body.

Subsequently, the resultant tube was cooled by a sizing die for controlling the size, followed by taking off, to obtain a single-layer tube having a layer thickness of 1.00 mm, an inner diameter of 6 mm, and an outer diameter of 8 mm.

### (3) Comparative Example 11

Component C and other optional components were preliminarily mixed into PA 12 (3030B, manufactured by Ube Industries, Ltd.) as shown in Table 3 blow, and, while feeding the resultant mixture into a twin-screw melt kneader (manufactured by The Japan Steel Works, Ltd.; model: TEX44), component B shown in Table 3 below was charged through a portion of the cylinder of the twin-screw melt kneader by means of a constant delivery pump, and melt-kneading was performed at a cylinder temperature of 200 to 270°C. The molten resin was extruded into a strand form, and then the resultant strand was introduced into a water bath, and cooled and cut, followed by vacuum drying, to obtain pellets of the polyamide resin composition of the present invention having the formulation shown in Table 3 below. Using Plabor (manufactured by Research Laboratory of Plastics Technology Co., Ltd.) single-layer extruding machine, the obtained polyamide resin composition was molten at an extrusion temperature of 240°C, and the extruded molten resin was introduced to a single-layer die at 240°C using an adapter to form a single-layer tube which is a hollow molded body.

Subsequently, the resultant tube was cooled by a sizing die for controlling the size, followed by taking off, to obtain a single-layer tube having a layer thickness of 1.00 mm, an inner diameter of 6 mm, and an outer diameter of 8 mm.

### (Evaluation conditions 3 for physical properties)

Physical properties were evaluated as follows.

### (1) Molding stability

The molding stability of a tube in taking-off was evaluated in accordance with the following criteria.
+++: Continuous molding is possible, and no pulsation occurs to achieve stable molding.
++: Continuous molding is possible, but slight pulsation occurs.
+: Continuous molding is impossible, and pulsation occurs.

### (2) Dimensional stability

When the measured outer diameter of a tube was within the range of 8.0 ± 0.1 mm, the tube was judged to be stable.

On the other hand, when the measured outer diameter of a tube was outside of the range of 8.0 ± 0.1 mm, the tube was judged to be unstable.

### (3) Appearance (Smoothness)

The outer surface of the tube obtained after molding was visually observed with respect to chatter marks caused in the circumferential direction of the tube, and the smoothness of the outer surface was evaluated in accordance with the following criteria.
+++: In the outer surface of the tube, no chatter mark is observed by the naked eye.
++: In the outer surface of the tube, very small chatter marks are observed by the naked eye.
+: In the outer surface of the tube, large chatter marks are observed by the naked eye.

### (4) Appearance (Surface waviness)

The outer surface of the tube obtained after molding was visually observed with respect to the appearance along the longitudinal direction of the tube, and the surface waviness of the tube (the state of uneven surface along the longitudinal direction of the tube) was evaluated in accordance with the following criteria.
+++: Almost no surface waviness was recognized and the tube was excellent.
++: Slight surface waviness was recognized but caused no problem in the practical use.
+: Surface waviness was marked and caused a severe problem in the practical use.

### The results of the evaluation are shown in Table 3.

**[Table 3]**

| | | Component | Unit | Example 6 | Example 7 | Example 8 | Example 9 | Example 10 | Comparative Example 11 |
|---|---|---|---|---|---|---|---|---|---|
| | Layer 1 Resin composition | PA6/12 | Wt% | 78.70 | 78.40 | 78.30 | 78.20 | 78.10 | |
| | | PA12 | Wt% | | | | | | 83.87 |
| | | VALCAN 9A32 | Wt% | 0.30 | 0.30 | 0.30 | 0.30 | 0.30 | 0.30 |
| Hollow | | TAFMER MH5010 | Wt% | 15.0 | 15.0 | 15.00 | 15.00 | 15.00 | |
| molded | | TAFMER MH5020 | Wt% | | | | | | 10.0 |
| body | | BBSA | Wt% | 5.00 | 5.00 | 5.00 | 5.00 | 5.00 | 5.00 |
| | | GEL ALL D | Wt% | | 0.30 | 0.30 | 0.30 | 0.30 | |
| | | CuI | Wt% | | | 0.10 | 0.20 | 0.30 | |
| | | IRGANOX 245 | Wt% | 0.90 | 0.90 | 0.90 | 0.90 | 0.90 | 0.75 |
| | | IRGAFOS 168 | Wt% | 0.10 | 0.10 | 0.10 | 0.10 | 0.10 | 0.08 |
| | Molding stability | | - | ++ | ++ | ++ | +++ | +++ | +++ |
| | Dimensional stability | | - | Stable | Stable | Stable | Stable | Stable | Stable |
| | Appearance (Smoothness) | | - | ++ | ++ | ++ | +++ | +++ | +++ |
| | Appearance (Surface waviness) | | - | ++ | ++ | ++ | +++ | +++ | +++ |

As apparent from Table 3 above, the single-layer hollow molded bodies (Examples 6 to 11), each of which is a hollow molded body formed from the polyamide resin composition of the present invention (Example 5), individually exhibit physical properties substantially equivalent to those of the single-layer hollow molded body using PA 12 (Comparative Example 11), which indicates that the present invention can be used as a substitute resin composition for PA 12 for which the demand is markedly increasing in recent years and likely to be too large.

## Claims

1. A polyamide resin composition comprising a PA 6/12 (component A), a plasticizer (component B), and a modified polyolefin (component C),
the component A comprising units a derived from ε-caprolactam or ε-aminocaproic acid and units b derived from aminododecanoic acid or ω-laurolactam,
wherein the content of the units a in the units constituting the component A is 60 to 98% by weight and the content of the units b in the units constituting the component A is 40 to 2% by weight,
wherein the content of the component A in the polyamide resin composition is 50 to 98% by weight, the content of the component B in the polyamide resin composition is 20 to 1% by weight, and the content of the component C in the polyamide resin composition is 30 to 1% by weight,
wherein the component C is at least one compound selected from the group consisting of an (ethylene and/or propylene)-α-olefin copolymer, an (ethylene and/or propylene)-(α,β-unsaturated carboxylic acid and/or unsaturated carboxylic acid ester) copolymer, an ionomer polymer, and an aromatic vinyl compound-conjugated diene compound block copolymer, the polymers being modified with a carboxylic acid and/or a derivative thereof.

2. The polyamide resin composition according to claim 1, wherein the component B is at least one compound selected from the group consisting of an arylsulfonamide derivative and a hydroxybenzoic acid ester or a derivative thereof.

3. The polyamide resin composition according to claim 1 or 2, further comprising a copper compound.

4. The polyamide resin composition according to any one of claims 1 to 3, which is for use in a hollow molded body.

5. A hollow molded body having a layer 1 formed by subjecting the polyamide resin composition according to any one of claims 1 to 4 to molding.

6. The hollow molded body according to claim 5, which further has a layer 2 formed by subjecting a resin composition comprising a polyamide resin to molding, wherein the layer 1 and the layer 2 are stacked so that the layers are in contact with each other.

7. The hollow molded body according to claim 5 or 6, wherein the layer 1 is the innermost layer of the hollow molded body.

8. The hollow molded body according to claim 5, which further has layers 3 and 4 each formed by subjecting a resin composition comprising a polyamide resin to molding,
wherein the layers 1, 3, and 4 are stacked so that the layers are in contact with one another,
wherein the layer 1 is not any of the outermost layer and the innermost layer of the hollow molded body.

9. The hollow molded body according to claim 8, wherein the layers 3 and 4 comprise polyamide 11 and/or polyamide 12.

10. The hollow molded body according to any one of claims 5 to 9, wherein the layer 1 has a thickness which is 50% or more of the total thickness of the all stacked layers in the hollow molded body.

## Patentansprüche

1. Polyamidharzzusammensetzung, umfassend ein PA 6/12 (Komponente A), einen Weichmacher (Komponente (B) und ein modifiziertes Polyolefin (Komponente C),
wobei die Komponente A Einheiten a, die von ε-Caprolactam oder ε-Aminocapronsäure abgeleitet sind, und Einheiten b, die von Aminododecansäure oder ω-Laurolactam abgeleitet sind, umfasst,
wobei der Gehalt der Einheiten a in den die Komponente A konstituierenden Einheiten 60 bis 98 Gew.% beträgt und der Gehalt der Einheiten b in den die Komponente A konstituierenden Einheiten 40 bis 2 Gew.% beträgt,
wobei der Gehalt der Komponente A in der Polyamidharzzusammensetzung 50 bis 98 Gew.% beträgt, der Gehalt der Komponente B in der Polyamidharzzusammensetzung 20 bis 1 Gew.% beträgt und der Gehalt der Komponente C in der Polyamidharzzusammensetzung 30 bis 1 Gew.% beträgt,
wobei die Komponente C mindestens eine Verbindung, ausgewählt aus der Gruppe bestehend aus einem (Ethylen- und/oder Propylen)-α-Olefin-Copolymer, einem (Ethylen- und/oder Propylen)-(α,β-ungesättigte Carbonsäure und/oder ungesättigte Carbonsäureester)-Copolymer, einem Ionomer-Polymer und einem Aromatische Vinylverbindungkonjugierte Dienverbindung-Blockcopolymer, ist, wobei die Polymere mit einer Carbonsäure und/oder einem Derivat davon modifiziert sind.

2. Polyamidharzzusammensetzung gemäß Anspruch 1, wobei die Komponente B mindestens eine Verbindung, ausgewählt aus der Gruppe bestehend aus einem Arylsulfonamidderivat und einem Hydroxybenzoesäureester oder einem Derivat davon, ist.

3. Polyamidharzzusammensetzung gemäß Anspruch 1 oder 2, ferner umfassend eine Kupferverbindung

4. Polyamidharzzusammensetzung gemäß irgendeinem der Ansprüche 1 bis 3, die zur Verwendung in einem hohlen Formkörper dient.

5. Hohler Formkörper mit einer Schicht (1), die gebildet wird, indem die Polyamidharzzusammensetzung gemäß irgendeinem der Ansprüche 1 bis 4 einem Formen unterzogen wird.

6. Hohler Formkörper gemäß Anspruch 5, die ferner eine Schicht (2) aufweist, die gebildet wird, indem eine Harzzusammensetzung, umfassend ein Polyamidharz, einem Formen unterzogen wird, wobei die Schicht (1) und die Schicht (2) so aufeinander gestapelt sind, dass die Schichten in Kontakt miteinander sind.

7. Hohler Formkörper gemäß Anspruch 5 oder 6, wobei die Schicht (1) die innerste Schicht des hohlen Formkörpers ist.

8. Hohler Formkörper gemäß Anspruch 5, der ferner Schichten (3) und (4) aufweist, die jeweils gebildet werden, indem eine Harzzusammensetzung, umfassend ein Polyamidharz, einem Formen unterzogen wird,
wobei die Schichten (1), (3) und (4) so gestapelt sind, dass die Schichten miteinander in Kontakt sind,
wobei die Schicht (1) nicht eine von der äußersten Schicht und der innersten Schicht des hohlen Formkörpers ist.

9. Hohler Formkörper gemäß Anspruch 8, wobei die Schichten (3) und (4) Polyamid 11 und/oder Polyamid (12) umfassen.

10. Hohler Formkörper gemäß irgendeinem der Ansprüche 5 bis 9, wobei die Schicht (1) eine Dicke aufweist, die 50 % oder mehr der Gesamtdicke von allen gestapelten Schichten in dem hohlen Formkörper beträgt.

## Revendications

1. Composition de résine polyamide comprenant un PA 6/12 (composant A), un plastifiant (composant B) et une polyoléfine modifiée (composant C),
le composant A comprenant des unités a dérivées de l'ε-caprolactame ou de l'acide ε-aminocaproïque et des unités b dérivées de l'acide aminododécanoïque ou du ω-laurolactame,
dans laquelle la teneur en unités a dans les unités constituant le composant A est de 60 à 98 % en poids et la teneur des unités b dans les unités constituant le composant A est de 40 à 2 % en poids,
dans laquelle la teneur en composant A dans la composition de résine polyamide est de 50 à 98 % en poids, la teneur en composant B dans la composition de résine polyamide est de 20 à 1% en poids et la teneur en composant C dans la composition de résine polyamide est de 30 à 1 % en poids,
dans laquelle le composant C est au moins un composé choisi dans le groupe constitué par un copolymère (éthylène et/ou propylène)-α-oléfine, un copolymère (éthylène et/ou propylène)-(α,β-acide carboxylique insaturé et/ou ester d'acide carboxylique insaturé), un polymère ionomère et un copolymère bloc de composé diénique conjugué-composé vinylique aromatique, les polymères étant modifiés avec un acide carboxylique et/ou un dérivé de celui-ci.

2. Composition de résine polyamide selon la revendication 1, dans laquelle le composant B est au moins un composé choisi dans le groupe constitué par un dérivé d'arylsulfonamide et un ester d'acide hydroxybenzoïque ou un dérivé de celui-ci.

3. Composition de résine polyamide selon la revendication 1 ou 2, comprenant en outre un composé de cuivre.

4. Composition de résine polyamide selon l'une quelconque des revendications 1 à 3, qui est destinée à être utilisée dans un corps moulé creux.

5. Corps moulé creux ayant une couche 1 formée en soumettant la composition de résine polyamide selon l'une quelconque des revendications 1 à 4 à un moulage.

6. Corps moulé creux selon la revendication 5, qui comporte en outre une couche 2 formée en soumettant une composition de résine comprenant une résine polyamide à un moulage, dans lequel la couche 1 et la couche 2 sont empilées de sorte que les couches sont en contact l'une avec l'autre.

7. Corps moulé creux selon la revendication 5 ou 6, dans lequel la couche 1 est la couche la plus à l'intérieur du corps moulé creux.

8. Corps moulé creux selon la revendication 5, qui comporte en outre des couches 3 et 4 formées chacune en soumettant une composition de résine comprenant une résine polyamide à un moulage,
dans lequel les couches 1, 3 et 4 sont empilées de sorte que les couches sont en contact entre elles,
dans lequel la couche 1 ne fait pas partie des couches la plus à l'extérieur et la plus à l'intérieur du corps moulé creux.

9. Corps moulé creux selon la revendication 8, dans lequel les couches 3 et 4 comprennent du polyamide 11 et/ou du polyamide 12.

10. Corps moulé creux selon l'une quelconque des revendications 5 à 9, dans lequel la couche 1 a une épaisseur qui est supérieure ou égale à 50 % de l'épaisseur totale de toutes les couches empilées dans le corps moulé creux.
